# EUROPÄISCHE PATENTSCHRIFT

(11) **EP 1 628 058 B1**
(45) Veröffentlichungstag und Bekanntmachung des Hinweises auf die Patenterteilung: **24.01.2007**
(21) Anmeldenummer: 05015838.5
(22) Anmeldetag: 21.07.2005
(51) Int. Cl.: F16L 5/10, F16L 5/02, H02G 3/22

(54) **Vorrichtung zur Abdichtung von Leitungsdurchführungen**
Sealing device of conduits lead-through
Dispositif d'étanchéité de traversées de conduites

(30) Priorität: 20.08.2004 DE 102004040661
(43) Veröffentlichungstag der Anmeldung: 22.02.2006
(73) Patentinhaber: Roxtec AB, 371 32 Karlskrona (SE)
(72) Erfinder: Potthast, Ralf, 22927 Grosshansdorf (DE)
(74) Vertreter: Hansmann, Dierk

(56) Entgegenhaltungen:
- WO-A-95/31026
- GB-A- 2 186 442
- US-A- 3 787 061

## Beschreibung

Die Erfindung bezieht sich auf eine Vorrichtung zur Abdichtung von Leitungsdurchführungen, wie Kabel, Rohre und dergleichen in Durchbrüchen, insbesondere bei Schotten und Decks auf Schiffen, bestehend aus in einen Rahmen baukastenartig durch über- und/oder nebeneinanderliegenden, ganz oder teilweise elastischen Paßstücken als Dichtungsmodulen und einer einstellbaren Klemmeinrichtung, durch die ein in der Rahmenebene wirkender Druck einstellbar ist und die einzelnen Module mit den aufgenommenen Leitungen dichtend in dem Rahmen gehalten werden, wobei die Dichtungsmodule zur Leitungsaufnahme an den Durchmesser anpaßbare Durchführungsausnehmungen aufweisen, wobei die Durchführungsausnehmung jedes Moduls zur Leitungsaufnahme mehrere zugeordnete elastische Lippen in der Art von Spreizelementen als Auflager aufweist, die durch auf die Module einwirkenden Druckkräfte sich an die eingesetzte Leitung dichtend anlegen, wobei die Lippen als Spzeizelemente eine gegenüber der eingelegten Leitung im Winkel angestellte Mittellinie aufweisen Anordnungen dieser Art für die Ausbildung flüssigkeits- und/oder gasdichter Durchtritte sind in unterschiedlichen Ausführungen bekannt geworden und werden häufig als Packsysteme im Schiffbau eingesetzt (siehe, zum Beispiel, die GB 2 186 442 A).

Es hat sich aber gezeigt, daß die aufgenommenen Kabel, insbesondere elektrische Kabel und entsprechende eingesetzte Bündelrohre, Toleranzen aufweisen, die eine vorgeschriebene Abdichtung durch die entsprechenden zugeordneten Module nicht ausreichend gewährleisten. Es müssen deshalb auch für genormte Kabel und Bündelrohre unterschiedliche Module eingesetzt und bevorratet werden, um eine geforderte Dichtwirkung zu gewährleisten.

Ferner ist es bekannt, gemäß der EP 429 916 B1 die Durchführungsaufnehmung mit voneinander lösbaren Schichten zu versehen, um durch Entfernen von Schichten eine individuelle Anpassung an die vorliegende Leitung vorzunehmen. Dieses ist eine relativ aufwendige Maßnahme und oftmals beim Einsatz von Hilfskräften für die Montage nicht ordnungsgemäß durchführbar.

Nach der DE 37 32 835 T2 ist eine Anordnung der gattungsgemäßen Art bekannt, wobei die Auflagen für Leitungsaufnahmen durch flächige Aufnahmestege gebildet sind. Diese Stege werden bei der Verspannung in X-Richtung, das heißt durch die zentrische Beanspruchung, elastisch verformt, wobei lediglich eine geringfügige Toleranz der eingesetzten Leitungen für eine ausreichende Abdichtung ermöglicht wird. Es besteht somit der Mangel, daß ein größerer Toleranzausgleich mit einer erforderlichen Abdichtwirkung nicht durchführbar ist.

Ferner ist nach der GB 21 81 902 A ebenfalls eine Anordnung mit Stegen bekannt, die dazu diene, die Leitungen im Rahmen zu halten und eine dauerhafte Kontaktierung für ein EMV-System mit einem Kabelschirm durchzuführen.

Nach der obengenannten GB 21 86 442 A sind zur Abdichtung parallel zugeordnete Aufnahmeflächen bekannt, wobei Zwischenkammern angeordnet sind und Innenflanken im Winkel verlaufen.

Die Aufgabe der Erfindung ist es, ein Modul für die vorgegebene Leitung einzusetzen und eine Abdichtung über den gesamten Toleranzbereich der Leitung zu verwenden sowie damit die vorgeschriebene Abdichtung zu gewährleisten.

Die Lösung dieser Aufgabe erfolgt erfindungsgemäß dadurch, daß die Lippen zur Dichtung jeweils als Lippenpaar unter Ausbildung einer eingeschlossenen, etwa v-förmigen Kammer gebildet sind und die Lippen im wesentlichen senkrechte äußere Flanken für eine Ausweichbewegung nach außen aufweisen.

Hierdurch ist es möglich, daß die Lippen sich entsprechend den vorliegenden Toleranzen sich an die eingesetzte Leitung dichtend anlegen und durch seitliches Auswandern beim Verspannen der Module eine Dichtwirkung über den gesamten Toleranzbereich bewirken.

Zur Ausschaltung von Kerbwirkungen und Verbesserung der Einstellbarkeit wird hierbei vorgesehen, daß die Basis der Kammer zwischen den Lippen u-förmig ausgebildet ist.

Eine gute Ausbildung zur Verbesserung der Dichtwirkung, wird dadurch geschaffen, daß die Lippen im Aufnahmebereich der eingesetzten Leitung etwa parallel zugeordnete Aufnahmeflächen bilden.

Zur Aufnahme der verschwenkten Lippen und Erhöhung der Flexibilität, wird vorgeschlagen, daß zwischen benachbarten Lippenpaaren eine Zwischenkammer angeordnet ist.

Eine günstige Ausbildung besteht darin, daß die der Kammer zugeordneten Innenflanken der Lippen im Winkel von etwa 40° geneigt sind.

Ferner wird vorgeschlagen, daß als Material für die Module ein Elastomer verwendet wird.

In der Zeichnung ist ein Ausführungsbeispiel der Erfindung schematisch dargestellt. Es zeigen:
- Fig. 1: eine Vorderansicht auf einen Wanddurchbruch mit eingesetzten Paßstücken als Module und einer Klemmvorrichtung,

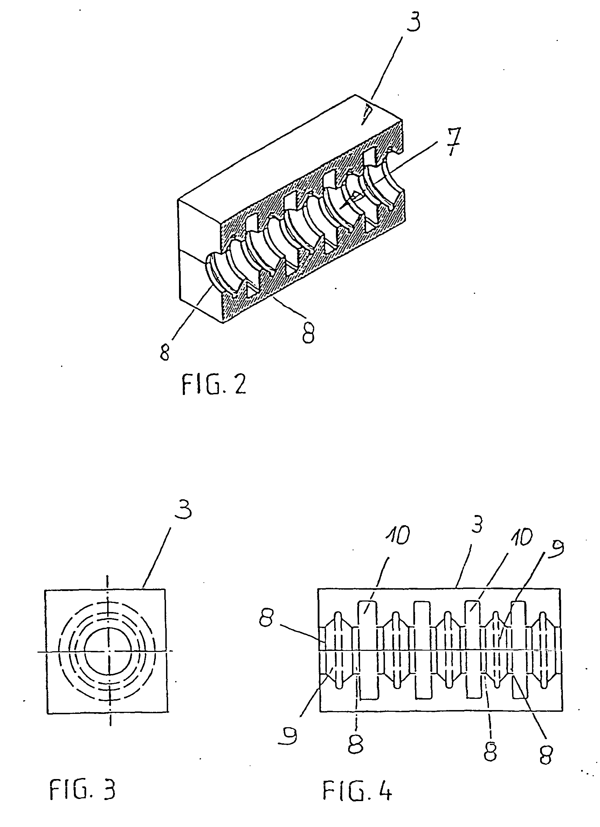

- Fig. 2: einen Schnitt durch ein Modul als Paßstück quer zur Teilung in perspektivischer Darstellung,
- Fig. 3: eine Vorderansicht auf ein Modul,
- Fig. 4: eine Draufsicht gemäß Fig. 3 mit eingezeichneten Lippen und Kammern,

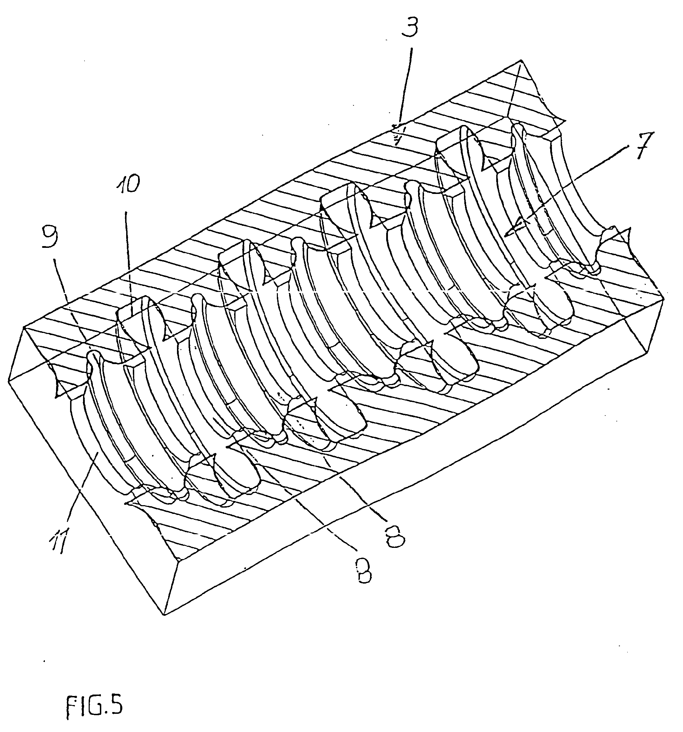

- Fig. 5: eine Draufsicht auf ein Halbelement eines Moduls mit den Lippen in Ausgangsstellung und in dick ausgezogener Strichstärke bei eingesetzter Leitung und einwirkendem Druck zur Abdichtung,

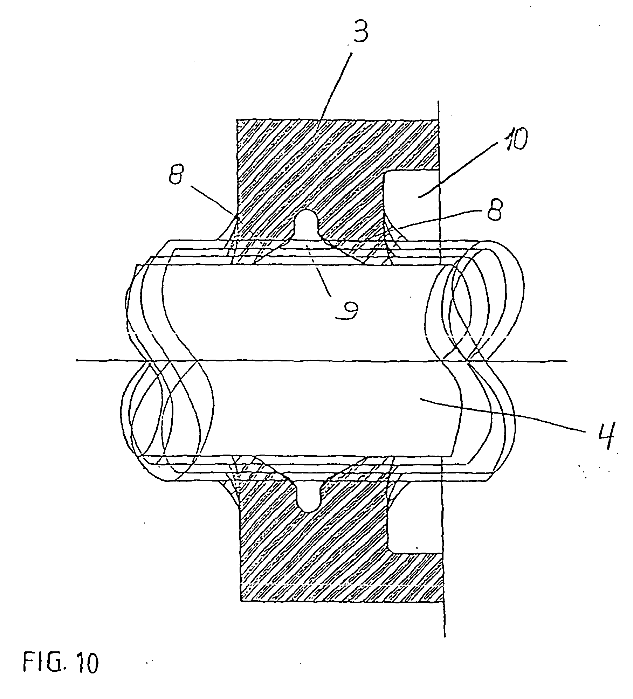

- Fig. 6 bis 9: eine vergrößerte Darstellung eines Lippenpaares mit eingesetzter Leitung bei unterschiedlichen Durchmessern in der Dichtposition,
- Fig.10: eine Schnittdarstellung eines Lippenpaares bei unterschiedlichen Durchmessern der eingesetzten Leitungen in der Dichtposition.

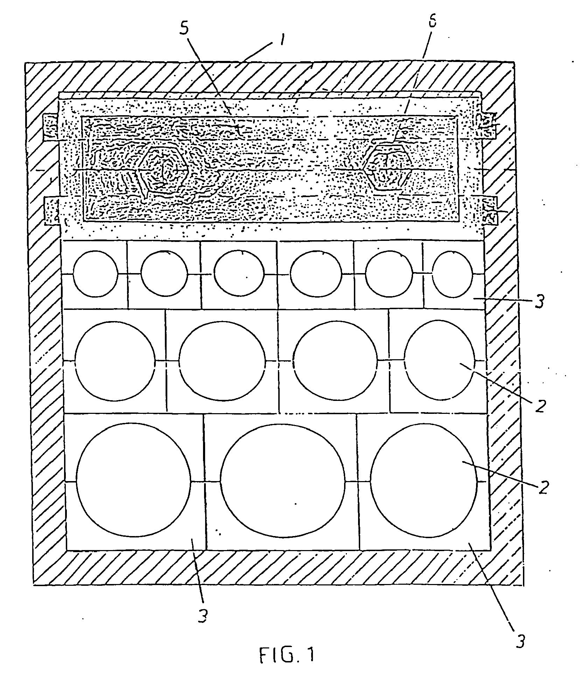

Eine prinzipielle Anordnung gemäß Fig. 1 zeigt, daß in einem Rahmen 1 eines Wanddurchbruches Kabel, Leitungen bzw. Rohre 4 in Öffnungen 2 elastischer Paßstücke 3 einsetzbar sind, wobei die Paßstücke 3 als Modul in geteilter Ausbildung baukastenartig über- und nebeneinander den Rahmen 1 ausfüllen.

Oberhalb des Paßstückes 3 sind zwei verstellbare Druckelemente angeordnet, die durch zugeordnete beidseitige Keilelemente 5 über Schrauben 6 als Spannelement gegeneinander verstellbar sind und damit in der Rahmenebene einen Druck auf die eingesetzten Paßstücke 3 ausüben. Hierzu besitzen die Druckelemente korrespondierende Führungsflächen zu den Keilflächen der trapezförmig ausgebildeten Keilelemente 5.

Selbstverständlich kann eine Verspannung auch auf andere Weise erfolgen.

Die Module 3 besitzen in einer Durchführungsausnehmung 7 zur Leitungsaufnahme Lippen 8 in der Art von Spreizrippen, wobei zwei zugeordnete Lippen 8 als Lippenpaar eine v-förmige Kammer 9 einschließen und die Basis der Kammer 9 in diesem Fall u-förmig ausgebildet ist. In dieser Ausbildung bilden die der Kammer 9 zugewandten Innenflanken der Lippen 8 einen Winkel von 42° zur Mittelsenkrechten. Die äußeren Flanken der Lippen 8 verlaufen im wesentlichen senkrecht. Hierdurch wird jeweils eine Ausweichbewegung der Lippen 8 entgegengesetzt nach außen gewährleistet.

Die Lippen 8 besitzen an ihrer Aufnahmeseite für die einzusetzende Leitung 4 etwa parallel zugeordnete Aufnahmeflächen 11.

Es sind in dieser Ausführung mehrere Lippen 8 als Lippenpaare über die Länge des Moduls 3 parallel angeordnet, wobei zwischen den einzelnen Paarungen Zwischenkammern 10 gebildet sind.

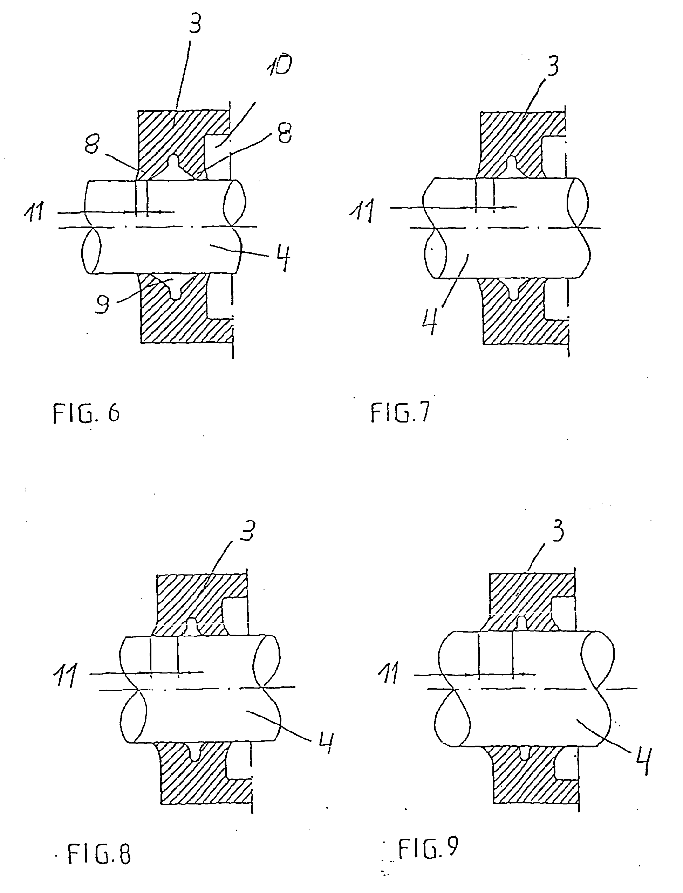

Beim Verpressen der Module 3 im Rahmen 1 und bei Aufnahme der Leitungen 4 wird unabhängig von den Toleranzen der Durchmesserabweichungen der Leitungen 4 ein Anlegen der Lippen 8 durch Spreizung ermöglicht. Somit wird bei größeren Kabeln, wie in Fig. 6 bis 8 dargestellt, die Aufnahmefläche 11 durch Ausweichen der Lippen 8 größer, so daß unabhängig von der Abweichung für das zugeordnete Modul 3 zur Leitung 4 eine Druckwirkung durch Anschmiegen erzielbar ist. Durch einen Außendruck wird dabei die Dichtwirkung verstärkt, da die Lippen 8 ihren wirksamen Durchmesser vergrößern.

## Patentansprüche

1. Vorrichtung zur Abdichtung von Leitungsdurchführungen, wie Kabel, Rohre und dergleichen in Durchbrüchen, insbesondere bei Schotten und Decks auf Schiffen, bestehend aus in einen Rahmen (1) baukastenartig durch über- und/oder nebeneinanderliegenden, ganz oder teilweise elastischen Paßstücken(3) als Dichtungsmodulen und einer einstellbaren Klemmeinrichtung (5, 6), durch die ein in der Rahmenebene wirkender Druck einstellbar ist und die einzelnen Module (3) mit den aufgenommenen Leitungen (4) dichtend in dem Rahmen (1) gehalten werden, wobei die Dichtungsmodule zur Leitungsaufnahme an den Durchmesser anpaßbare Durchführungsausnehmungen (7) aufweisen, wobei die Durchführungsausnehmung (7) jedes Moduls (3) zur Leitungsaufnahme mehrere zugeordnete elastische Lippen (8) in der Art von Spreizelementen als Auflager aufweist, die durch auf die Module (3) einwirkenden Druckkräfte sich an die eingesetzte Leitung (4) dichtend anlegen, wobei die Lippen (8) als Spreizelemente eine gegenüber der eingelegten Leitung im Winkel angestellte Mittellinie aufweisen, **dadurch gekennzeichnet, daß** die Lippen (8) zur Dichtung jeweils als ein Lippenpaar unter Ausbildung einer eingeschlossenen, etwa v-förmigen Kammer (9) gebildet und die Lippen (8) im wesentlichen senkrechte äußere Flanken für eine Ausweichbewegung nach außen aufweisen.

2. Vorrichtung nach Anspruch 1, **dadurch gekennzeichnet, daß** die Basis der Kammer (9) zwischen den Lippen (8) u-förmig ausgebildet ist.

3. Vorrichtung nach Anspruch 1 oder 2, **dadurch gekennzeichnet, daß** die Lippen (8) im Aufnahmebereich der eingesetzten Leitung (4) etwa parallel zugeordnete Aufnahmeflächen (11) bilden.

4. Vorrichtung nach einem der Ansprüche 1 bis 3, **dadurch gekennzeichnet, daß** zwischen benachbarten Lippenpaaren eine Zwischenkammer (10) angeordnet ist.

5. Vorrichtung nach einem der Ansprüche 1 bis 4, **dadurch gekennzeichnet, daß** die der Kammer (9) zugeordneten Innenflanken der Lippen (8) im Winkel von etwa 40 ° geneigt sind.

6. Vorrichtung nach einem der Ansprüche 1 bis 5, **dadurch gekennzeichnet, daß** als Material für die Module (3) ein Elastomer verwendet wird.

## Claims

1. A sealing device of conduit lead-throughs, such as cables, pipes and the like in passages, particularly at bulkheads and decks of ships, comprising of in a frame (1) disposed wholly or partially elastic fitting pieces (3) as sealing modules in a modular arrangement above and/or adjacent to each other and an adjustable clamping device (5, 6), by means of which a pressure acting in the frame plane can be adjusted and the separate modules (3) with the received conduits (4) are held in a sealing manner in the frame (1), wherein the sealing modules disposed to receive conduits have lead-through openings (7) that can be adapted to the diameter, wherein the lead-through opening (7) of each module (3) to receive conduits has several elastic lips (8) in the form of spreader elements as support, which lips lies sealingly against the inserted conduit (4) by means of the compressive forces acting on the modules (3), wherein the lips (8) in the form of spreader elements have a central line showing an angle in relation to the inserted conduit, **characterized in that** the lips (8) for sealing always are formed as a pair of lips forming an enclosed, about v-formed chamber (9) and that the lips (8) have essentially vertical outer flanks for a folding movement outwards.

2. Device according to claim 1, **characterized in that** the base of the chamber (9) has a u-form between the lips (8) .

3. Device according to claim 1 or 2, **characterized in that** the lips (8) form receiving surfaces (11) that are arranged roughly parallel in the receiving area for the inserted conduit (4).

4. Device according to any of the claims 1 to 3, **characterized in that** an intermediate chamber (10) is arranged between adjacent pairs of lips.

5. Device according to any of the claims 1 to 4, **characterized in that** the inner flanks of the lips (8) in the chamber (9) incline with an angle of about 40°.

6. Device according to any of the claims 1 to 5, **characterized in that** an elastomer is used as the material for the modules (3).

## Revendications

1. Dispositif d'étanchéification de traversées de conduites comme des câbles, des tubes et autres dans des passages, notamment dans le cas de cloisons étanches et de ponts sur des navires, constitué de raccords (3) comme modules d'étanchéité entièrement ou partiellement élastiques, superposés et/ou juxtaposés de façon modulaire dans un cadre (1), et d'un système de serrage réglable (5, 6), grâce auquel une pression agissant dans le plan du cadre peut être réglée et les modules individuels (3) recevant les conduites (4) sont maintenus de manière étanche dans le cadre (1), les modules d'étanchéité destinés à recevoir les conduites présentant des évidements de passage (7) pouvant être adaptés au diamètre, l'évidement de passage (7) de chaque module (3) destiné à recevoir les conduites présentant comme supports plusieurs lèvres élastiques (8) associées à la façon d'éléments d'écartement, qui, grâce aux forces de pression agissant sur les modules (3), s'appuient de manière étanche contre la conduite (4) insérée, les lèvres (8) comme éléments d'écartement présentant une ligne médiane placée dans l'angle par rapport à la conduite insérée, **caractérisé en ce que** les lèvres (8), en vue de l'étanchéité, sont formées respectivement comme une paire de lèvres en réalisant une chambre (9) entourée, approximativement en forme de V et les lèvres (8) présentent des flancs externes essentiellement verticaux pour un mouvement de rabat vers l'extérieur.

2. Dispositif selon la revendication 1, **caractérisé en ce que** la base de la chambre (9) entre les lèvres (8) est réalisée en forme de U.

3. Dispositif selon la revendication 1 ou 2, **caractérisé en ce que** les lèvres (8) forment dans la zone de réception de la conduite (4) insérée des surfaces de réception (11) associées de manière à peu près parallèle.

4. Dispositif selon l'une quelconque des revendications 1 à 3, **caractérisé en ce qu'**une chambre intermédiaire (10) est disposée entre les paires de lèvres voisines.

5. Dispositif selon l'une quelconque des revendications 1 à 4, **caractérisé en ce que** les flancs intérieurs des lèvres (8), associés à la chambre (9), sont inclinés à l'angle de 40° environ.

6. Dispositif selon l'une quelconque des revendications 1 à 5, **caractérisé en ce qu'**un élastomère est utilisé comme matériau pour les modules (3).
